# EUROPEAN PATENT APPLICATION

(11) **EP 0 779 032 A1**
(43) Date of publication of application: **18.06.1997**
(21) Application number: 95118122.1
(22) Date of filing: 17.11.1995
(51) Int. Cl.: A23C 19/05, A23C 19/09, A23C 19/076, A01J 25/00

(54) **A process and a plant for preparing a cheese product containing particulate edible material**

(71) Applicant: Nordex Food A/S, 9330 Dronninglund (DK)
(72) Inventor: Imhof, Werner, DK-9800 Hjorring (DK); Poulsen, Steen Ditlev, DK-9560 Hadsund (DK)
(74) Representative: Nielsen, Henrik Sten

(57) **Abstract**

The present invention relates to a process for preparing a cheese product containing particulate edible material from milk, comprising:
a) introducing said milk into a cheese vat;
b) addition of a bacterial culture of a specific fermentation temperature range into said cheese vat containing said milk for fermentation of said milk and addition of rennet to said cheese vat, so as to cause coagulation of said milk, thereby producing a coagulum;
c) thermostatically heating or cooling said milk including said bacterial culture and said rennet to a temperature within said specific fermentation temperature range;
d) cutting said coagulum into individual cheese granules;
e) stirring and forming said cheese granules, so as to cause at least partly discharge of whey therefrom, thereby providing cheese granules of a specific consistency;
f) mixing said cheese granules with particulate edible material without influencing said consistency of said cheese granules, so as to provide an intimate mixture of cheese granules and particulate edible materiale; and
g) processing said mixture into said cheese product.

Furthermore, the invention concerns a cheese product obtainable by the process of the invention, and a plant for carrying out the process of the invention.

## Description

The present invention relates to a new cheese product composed of an intimate miture of cheese granules and edible particulate material, a new process for preparing the cheese product containing particulate edible material from milk, and a new plant for preparing a cheese product containing particulate edible material from milk.

The term "edible particulate material" is intended to mean natural or synthetic ingredients of vegetable and/or animal origin and may be of a soft nature or hard nature and may be selected from fruit, vegetables, meat, nuts and the like and slices and mixtures thereof. Edible particulate material of a soft nature should mean fresh fruit, vegetables, meat and the like and slices and pieces thereof, and edible particulate material of a hard nature should mean nuts, dried fruit, vegetables, meat and the like and slices and pieces thereof. Edible particulate material should be construed as meaning particulates with a minimum dimension of about 1 mm (e.g. a pepper corn) to 50 mm, and weighing between 20 mg (e.g. a pepper corn) and 20 g. Edible particulate material should not be construed as meaning finely divided material such as powders of sugar, salt, pepper, spices and the like, cremes, purée and ground material and the like. More particularly fruit may selected from grapes, raisins, berries, strawberries, citrus, apples, plums and the like, and vegetables may be selected from horseraddish, mushroom, olives, peppers, radish, tomatoes and the like, and meat may be selected from ham and the like, fish, e.g. salmon and the like.

The prior art discloses cheese spread or cream cheese containing vegetables or meat or the like, wherein the vegetables or meat are stirred into the processed product which is then packaged and stored for the final consumer.

Furthermore, the prior art discloses soft cheese products having nuts, pepper, spices and the like distributed on the surface of the cheese product.

In European patent application No. 0 515 318, a ropy-dough cheese is disclosed which is formed into filaments or thin threads at a particular moment of treatment, viz. when the dough has become mature. The ropy-dough is prepared by a process comprising standardizing the milk base, preparation of the dough including inoculation of the different species of milk ferments, addition of rennet and breaking of curd, preparation of the cheese including addition to the curd of selected cut into pieces and/or ground ingredients prepared separately or already available on the marked, completion of the cheese including roping and packaging.

It is an object of the present invention to provide a cheese product wherein the cheese product is composed of an intimate mixture of cheese granules and edible particulate material.

It is a further object of the present invention to provide a process for preparing the cheese product containing particulate edible material from milk.

It is a further object of the present invention to provide a plant for preparing the cheese product containing particulate edible material from milk.

The present invention provides a process for preparing a cheese product containing particulate edible material from milk, comprising:
a) introducing the raw milk into a cheese vat;
b) addition of a bacterial culture of a specific fermentation temperature range into the cheese vat containing the milk for fermentation of the milk and addition of rennet to the cheese vat, so as to cause coagulation of the milk, thereby producing a coagulum;
c) thermostatically heating or cooling the milk including the bacterial culture and the rennet to a temperature within the specific fermentation temperature range;
d) cutting the coagulum into individual cheese granules;
e) stirring and forming the cheese granules, so as to cause at least partly discharge of whey therefrom, thereby providing cheese granules of a specific consistency;
f) mixing the cheese granules with particulate edible material without influencing the consistency of the cheese granules, so as to provide an intimate mixture of cheese granules and particulate edible materiale; and
g) processing the mixture into the cheese product.

The introduction of the milk into the cheese vat may be carried out manually or by mechanical, electrical or pneumatical introduction means.

The milk is milk of a specific origin, e.g. milk from cows, sheep, goats or the like, or mixed milk having a 0 to 10% fat content and 2,5 to 5% protein content. After filtering, the raw milk is optionally pasteurized by usual procedures or submitted to ultrafiltration, microfiltration and other similar procedures. Once the raw milk characteristics have been determined, the milk is brought to a desired temperature usually in the range of 29 to 33°C.

The addition of bacterial culture into the cheese vat may be carried out manually or by mechanical, electrical or pneumatical addition means. The bacterial culture is either a psychrofile, mesofile or thermofile culture and is preferably a mesofile culture having a temperature optimum in the range of about 20 to 40°C. The cheese vat is prepared by any suitable material, such as aluminium, steel, alloys and the like, preferably stainless steel.

The addition of rennet to the cheese vat may be carried out manually or by mechanical, electrical or pneumatical addition means. Any suitable rennet may be used, such as Marzyme (Marshall Products).

The thermostatic heating or cooling may be carried out by any suitable temperature adjusting means, which means communicate with a thermostat.

The cutting may be carried out by any suitable cutting means, such as wires or the like. The cheese granules may have any specific size and shape, such as cubes of e.g. 5 x 5 x 5 mm to 30 x 30 x 30 mm, preferably 15 x 15 x 15 mm. Such cheese granules may also be more rectangular in shape, e.g. 5 x 5 x 10 mm to 20 x 20 x 30 mm, or the granules may be of individual different shapes and sizes.

During the stirring the cheese granules are formed into irregular shapes, the stirring causing at least partly discharge of whey from the cheese granules, thereby providing cheese granules of a specific consistency. The partly discharge of whey from the cheese granules is performed in such a way that the cheese granules do not dry out. After stirring, the cheese granules still contain whey so as to maintain the specific consistency thereof. A more rough stirring will cause discharge of too much whey, thereby causing the cheese granules to dry out or partly dry out and thereby changing the specific consistency. Such changing of the specific consistency would provide a different cheese product with a different consistency. Stirring is carried out manually or by electrical, mechanical or pneumatical means. The mixing provides an intimate mixture of cheese granules and particulate edible material without influencing the consistency of the cheese granules. The intimate mixture means that the particulate edible material is distributed and mixed with the cheese granules in such a way that the further processing of the mixture will lead to the final cheese product.

In the present context, the term milk is a genetic term meaning any milk of the following kinds, raw milk, pasteurized milk, ultrafiltrated milk, microfiltrated milk, or hyperfiltrated milk. The milk may further irrespective of its kind be standardized or non standardized, provided the milk is standardized, the milk is adjusted or standardized to a specific contents of fat or a specific content of fat and protein.

In the present context, the term cheese vat is a generic term intended to comprise any container or enclosure adapted to or intended to receive milk for producing cheese, the cheese vat may be a closed vessel or an open vessel and may be configurated in any appropriate diametrical shape including cubes, spheres, cylinders of any arbitrary geometric origin, such as circular cylinders, rectangular cylinders, eliptic cylinders, etc. or combinations of the above or any other geometric configuration.

In a first embodiment of the present process, the mixing in step f) of the cheese granules and the edible particulate material is carried out in the cheese vat.

The mixing in step f) of the cheese granules and the edible particulate material carried out in the cheese vat is immediately followed by discharge of the mixture from the cheese vat in order to avoid the edible particulate materiale settling or flowing in the cheese vat.

In a second embodiment of the present process, the mixing comprises the initial step of draining a portion of the whey from the cheese vat. Hereafter the mixing is carried out in accordance with the mixing in step f).

In a third embodiment of the present process, the processing of the mixture of the particulate material and the cheese granules comprises the initial steps of transferring the mixture to one or more cheese hoops. The cheese hoops may be made of any suitable material, such as plastic, aluminium, steel or the like.

In a fourth embodiment of the present process, the mixing of the cheese granules and the edible particulate material is carried out before or while performing the step of transferring the mixture to one or more cheese hoops.

In a fifth embodiment of the present process, the mixing is performed by adding the particulate material to the cheese granules.

In a sixth embodiment of the present process, the mixing is performed by adding the cheese granules to the particulate material.

In a seventh embodiment of the present process, the transferring of the mixture is carried out by means of a transfer means, such as a conveyer means or the like. Such conveyer means is preferably a conveyer belt with a mesh-like structure.

In a eighth embodiment of the present process, the edible particulate material is selected from nuts, grapes, raisins, berries, strawberries, citrus, apples, plums, horseraddish, mushrooms, olives, peppers, raddish, tomatoes, fish, ham and the like and slices and mixtures thereof. The particulate edible material is preferably slices of olive.

Such edible particulate material has a minimum dimension in the range of about 1 mm to 50 mm, e.g. 1 mm to 40 mm, 1 mm to 30 mm, 1 mm to 20 mm, 1 mm to 10 mm, such as 1 mm to 2 mm, 2 mm to 3 mm, 3 mm to 4 mm, 4 mm to 5 mm, 5 mm to 6 mm, 6 mm to 7 mm, 7 mm to 8 mm, 8 mm to 9 mm, 9 mm to 10 mm, 10 mm to 20 mm, 20 mm to 30 mm, 30 mm to 40 mm, or 40 mm to 50 mm. Furthermore, the particulate edible material has weight in the range of 20 mg to 20 g, e.g. 20 mg to 2 g, 20 mg to 200 mg, 20 mg to 100 mg, such as 20 mg to 100 mg, 100 mg to 200 mg, 200 mg to 2g, or 2 g to 20 g. Moreover, the particulate edible material has a volume in the range of 1 mm³ to 10 cm³, e.g. 1 mm³ to 8 cm³, 1 mm³ to 6 cm³, 1 mm³ to 4 cm³, such as 1 mm³ to 50 mm³, 50 mm³ to 200 mm³, 200 mm³ to 500 mm³, 500 mm³ to 1000 mm³, 1000 mm³ to 2 cm³, 2 cm³ to 4 cm³, 4 cm³ to 6 cm³, 6 cm³ to 8 cm³ and 8 cm³ to 10 cm³.

In any of the above described processes the cheese granules produced in step d) may have a size in the range of about 5 x 5 x 5 mm to about 30 x 30 x 30 mm, preferably 15 x 15 x 15 mm.

The present invention also provides a cheese product wherein the cheese product is composed of an intimate mixture of cheese granules and edible particulate material. The cheese product containing particulate edible material is obtainable by the process of the present invention and by the first to eighth embodiment thereof. The above cheese product preferably contains edible particulate material selected from nuts, grapes, raisins, berries, strawberries, citrus, apples, plums, horseraddish, mushrooms, olives, peppers, raddish, tomatoes, fish, ham and the like and slices and mixtures thereof.

Preferably the edible particulate material is slices of olive.

Most preferably the cheese product is a feta-type cheese including slices of olive.

The present invention also provided a plant for preparing a cheese product containing particulate edible material from milk comprising:
a) a cheese vat;
b) means for introducing the milk into the cheese vat;
c) means for addition of a bacterial culture of a specific fermentation temperature range into the cheese vat containing the milk for fermentation of the milk and addition of rennet to the cheese vat, so as to cause coagulation of the milk, thereby producing a coagulum;
d) means for thermostatically heating or cooling the milk including the bacterial culture and the rennet to a temperature within the specific fermentation temperature range;
e) means for cutting the coagulum into individual cheese granules;
f) means for stirring and forming the cheese granules, so as to cause at least partly discharge of whey therefrom, thereby providing cheese granules of a specific consistency;
g) means for mixing the cheese granules with particulate edible material without influencing the consistency of the cheese granules, so as to provide an intimate mixture of cheese granules and particulate edible materiale; and
h) means for processing the intimate mixture into the cheese product.

In preferred embodiments the plant is being adapted to carry out the process according to the first to eighth embodiment of the present process for preparing the cheese product according to the present invention.

The invention will now be described with reference to the drawings in which
Fig. 1 is an overall perspective, schematic and partly broken away view of a first and presently preferred embodiment of a plant for carrying out a method according to the present invention of producing cheese including olive slices, in particular cheese of the feta-type,
Fig. 2 is a partly sectional and schematic view of alternative embodiments of the plant illustrated in Fig. 1,
Fig. 3 is a partly sectional and schematic view of an alternative embodiment of the plant according to the present invention,
Fig. 4 is a perspective and schematic view of a further alternative embodiment of the plant according to the present invention,
Fig. 5 is a perspective and schematic view of a section for mixing cheese granules and olive slices together for producing a mixture of cheese granules and olive slices prior to filling the cheese granules and the olive slices into cheese hoops,
Fig. 6 is a perspective and schematic view illustrating an alternative technique of filling a mixture of cheese granules and olive slices into a cylindrical receiver and compacting and cutting the cheese product,
Fig. 7 is a perspective and schematic view of a cheese of the feta-type including an integral mixture of feta granules and olive slices, and
Fig. 8 is a perspective and schematic view similar to the view of Fig. 7 illustrating the cheese of Fig. 7 having a section of the cheese cut away disclosing the inner structure of the cheese.

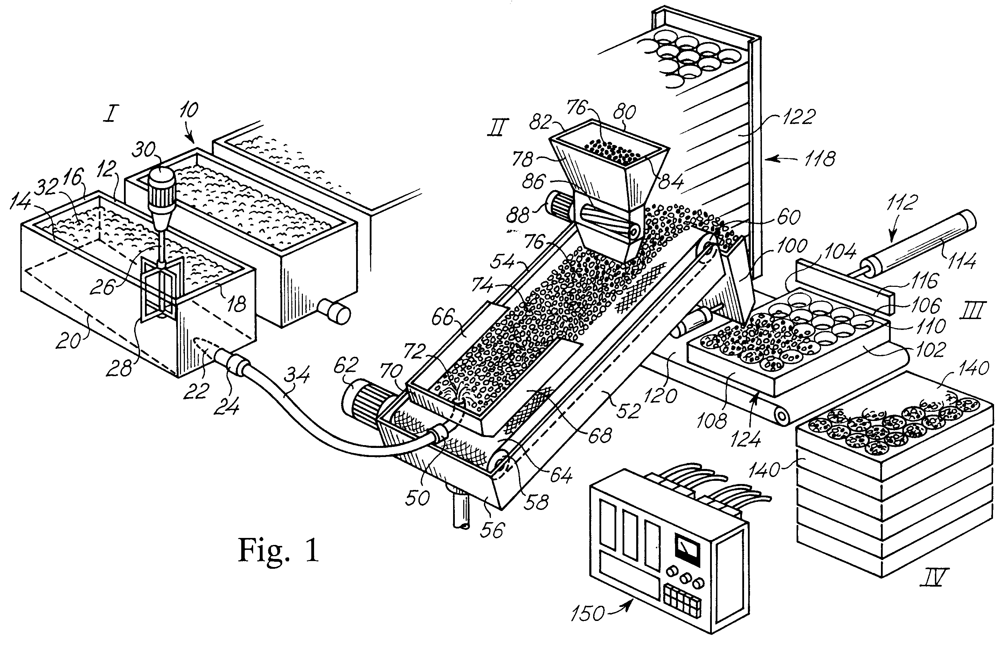

In Fig. 1, a first and presently preferred embodiment of a plant according to the present invention is shown for producing composite cheese and grain products in accordance with the process according to the present invention for producing cheese according to the present invention. The plant basically comprises four sections designated the reference signs I, II, III, and IV. The section I constitutes a cheese granules producing subplant or section to be described in greater details below, the section II constitutes a subsection in which cheese granules are separated from the cheese granules containing whey for producing individual and separately positioned cheese granules to be mixed with olive slices or similar larger particulate components to be integrally included in the final cheese product, the section III consitutes a filling section in which the mixture of cheese granules and olive slices are introduced into cheese hoops in which the final cheese product is shaped, and the subsection IV constitutes a storing section in which the cheese hoops produced in subsection III are positioned and stored on top of one another and optionally further processed through the application of pressure, drying, exposure to salt water, application of enzymatic reaction inhibiting liquids, etc.

In Fig. 1, section I, a number of cheese vats 10 are provided, the cheese vats being rectangular in shape and being defined by a side wall 12 and an opposite side wall 14 and an end wall 16 and an opposite end wall 18 and a bottom 20, the bottom 20 sloping downwards from the end wall 16 to the opposite end wall 18. In the bottom 20 adjacent to the end wall 18 a recess 22 is provided. The vats 10 can be made of any suitable material such as aluminium, steel, alloys and the like, preferably stainless steel. After preparation of the raw milk, it is transferred to the cheese vats 10 and a culture for fermentation and rennet is added to the raw milk and then coagulation takes place. After coagulation the coagulum is cut into cubes (not shown) whereafter stirring and forming of cheese granules takes place. The stirring of the suspension 32 of cheese granules and whey is carried out with a stirrer comprising a rotor shaft 26 whereto rotor blades 28 are attached, the rotor shaft 26 being connected to a motor 30. The stirrer is operated in the usual manner by moving along an X-axis and an Y-axis and optionally rotated or tilted relative to its longitudinal axis. The stirring may also be carried out manually.

As soon as the cheese granules have obtained a desired consistency, the suspension 32 is led through a connecting piece 24 connected to and communicating with the recess 22 and flows through a flow line 34. As soon as the first vat 10 has been emptied the flow line 34 is connected to the next vat in line and so on, until all of the vats have been emptied. The emptying of the cheese vats 10 is caused by way of gravity, the vats 10 being placed above a conveyer system constituting a component of the section II to be described in greater details below. Alternatively, a pump means (not shown) may be provided for causing the transfer of cheese granules to the conveyer system.

In Fig. 1, section II, the above-mentioned conveyer system is shown comprising a frame defined by a side wall 52 and an opposite side wall 54 and an end wall 56 whereto a first roller 58 constituting a drive roller is connected adjacent the end wall 56 of the frame and a second roller 60 constituting an idler roller opposite the roller 58. The first roller 58 is connected with a motor 62 for causing the rotation of the roller 58. Alternatively, the motor 62 may be connected to the second roller 60. A conveyer belt 64 is wrapped around the rollers 58, 60 to carry out the transportation of the cheese granules 74. A second frame defined by a side wall 68 and an opposite side wall 66 and an end wall 70 is placed above the conveyer belt 64 in order to direct and keep the cheese granules 74 on the conveyer belt 64. The suspension 32 of cheese granules and whey is led through the flowline 34 which is connected to a connecting piece 50 which connecting piece 50 is incorporated into the end wall 70 and sprayes at 72 the cheese granules 74 and whey onto the conveyer belt 64.

During transportation on the conveyer belt 64, whey is being discharged (not shown). Pieces of olive 76 are added to a dosing means constituted by a hopper defined by a sloping side wall 78 and an opposite sloping side wall 80 and a sloping end wall 82 and an opposite sloping end wall 84. The dosing means comprises a feed spiral 86 for dosing the olives 76 to the conveyer belt 64 through an apertured bottom wall (not shown) of the dosing means or hopper. The spiral is operated by a motor 88. Through dosing of the olives 76 to the cheese granules 74 onto the conveyer belt 64, the olives 76 are mixed with the cheese granules so as to produce an intimate mixture of the cheese granules 74 and the olives 76, the speed of transportation of the conveyer belt 64 and the rate of dosing of the olives 76 define the rate of cheese granules relative to olives or vise versa. Consequently, through altering the speed of transportation of the conveyer belt 64 alternatively the rate of dosing the olives 76, the rate of cheese granules relative to olives may be changed for producing a mixture of cheese granules 74 and olives 76 of a specific and intended composition or rate. The mixture of olives 76 and cheese granules 74 is led to a slope 100.

In Fig. 1, section III, a cleaning facility 118 is shown for cleaning cheese hoops, one of which is designated the reference number 122. After cleaning, the hoops 122 are transferred individually to a conveyer belt 120 and positioned juxtaposed to the dosing slope 100. The cheese hoops being defined by side wall 102 and an opposite side wall 104 and an end wall 106 and an opposite end wall 108 and wherein cylindric containers 110 are incorporated. The mixture of cheese granules 74 and olives 76 is dosed into the containers 110 and excess of the mixture is removed by a removing facility 112 comprising an arm 114 and a shovel 116 for pushing excess material of the mixture of cheese granules 74 and olives 76 away. Alternatively, removing of excess of cheese granules and olives may be carried out manually. The excess material of the mixture of cheese granules and olives is preferably recycled to the conveyer system or the dosing slope 100 by means of e.g. a further conveyer belt (not shown) or the like.

After filling into suitable containers of the mixture of cheese granules and olives, the cheese hoops are stacked on top of previously filled cheese hoops as shown in Figure 1, Section IV. The cheese hoops 140 are stacked and turned upside down (not shown) and the cheese products are acidified in the usual manner for producing the final cheese product.

In the central part of Fig. 1, a control panel 150 is shown which includes a microprocessor or relay based control section controlling the overall operation of the above described motors and the removing facility 112 for controlling the overall production of cheese granules and the mixture of olives and cheese granules. The control panel 150 may apart from communicating with the motors 30, 62, 88 and the removing facility 112 be connected to additional control means such as optic detectors, proximity detectors or video registration devices for the purpose of generating control signals or feed back signals to be fed to the control panel 150 or the control means included in the control panel 150 for controlling the overall operation of the plant shown in Fig. 1.

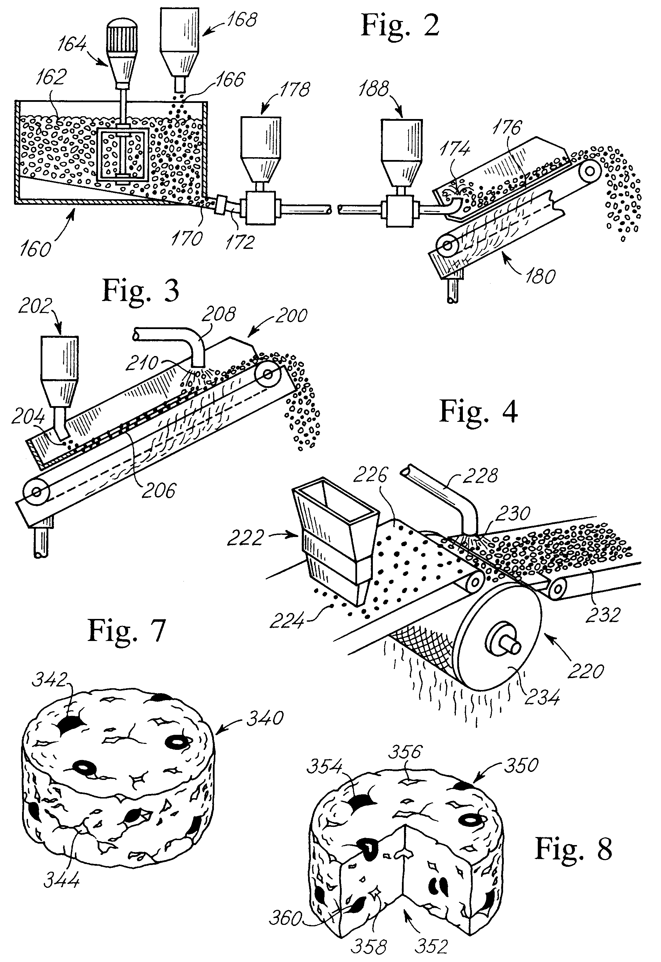

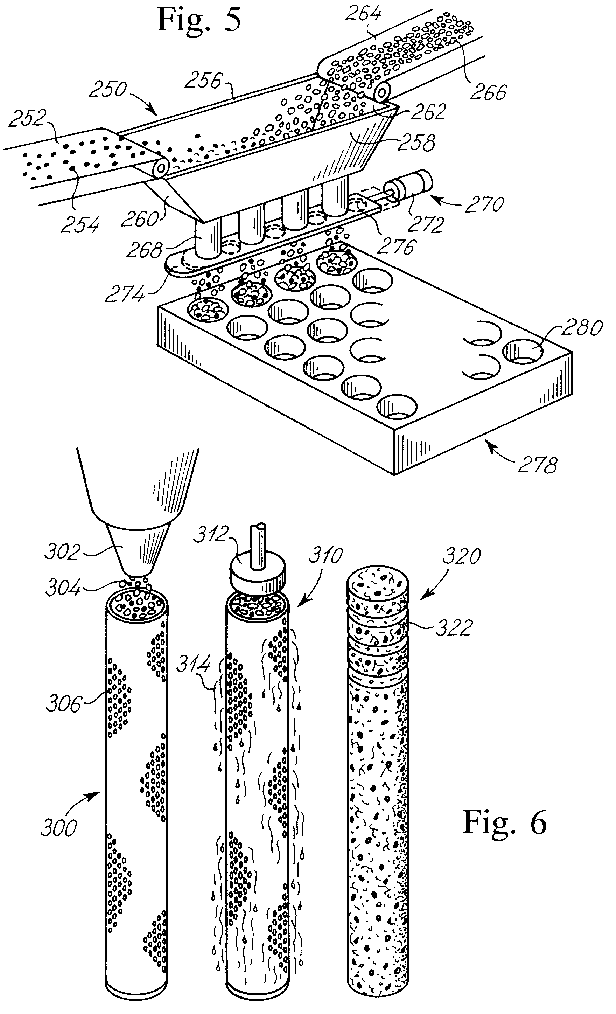

In Fig. 2, a second, third and fourth embodiment of the plant illustrated in Fig. 1, sections I and II, are shown.

In Fig. 2, a cheese vat 160 preferably of the same type as that described above with reference to Fig. 1, section I, is equipped with a stirrer 164 preferably of the same type as that described above with reference to Fig. 1, section I. As described above with reference to Fig. 1, a suspension 162 of cheese granules and whey is led through a connecting piece 170 connected to and communicating with a recess (not shown) and flows through a flow line 172 to reach a conveyer system 180 preferably of the same type as that described above with reference to Fig. 1, section II, and the mixture of cheese granules and whey is sprayed out of a connecting piece 174 as described above with reference to Fig. 1, section II, at 72. The mixture is sprayed onto a conveyer belt 176 preferably of the same type as that described above with reference to Fig. 1, section II, and the cheese granules discharges whey and are transported to a slope (not shown) for carrying out the filling of the cheese hoops and the further treatment as described above with reference to Fig. 1, section III and IV.

A first alternative way of dosing the slices of olive 166 is shown at 168. The hopper 168 may be of the same type as that described above with reference to Fig. 1, section II, but may have any suitable presentation. The olives 166 are dosed into the suspension 162 of cheese granules and whey and stirring by the stirrer 164 is carried out in order to distribute the olives 166 throughout the suspension. The stirring and distribution of olives 166 should be carried out gently, e.g. by means of the stirrer 164 and care should be taken not to break down the cheese granules or change the consistency thereof. The suspension of cheese granules and whey and olives should immediately after mixing be led through the connecting piece and transported to the conveyer system 180 as described above.

A second alternative way of dosing the olives is carried out directly into the flow line 172. The dosing facility shown at 178 is preferably of the same type as the above described dosing facility 168 and is placed adjacent the cheese vat 160. After dosing the olives into the flow line 172 the mixture of cheese granules and whey and olives is transferred to the conveyer system 180 as described above.

A third alternative dosing of the olives is carried out at 188. The dosing facility 188 is preferably of the same type as those described above at 168 and 178 and is placed adjacent the conveyer system 180.

In Fig. 3, a further embodiment of the plant according to the present invention is shown.

In Fig. 3, a conveyer system 200 is shown, the conveyer system 200 preferably being of the same type as that described above with reference to Fig. 1, section II. However, alternative ways of dosing slices of olive 204 and cheese granules 210 are shown. The dosing facility 202, preferably of the same type as that described above with reference to Fig. 1, section II, is dosing the slices of olive 204 to a conveyer belt 206 transporting the olives 204 towards a slope (not shown) for carrying out the filling into suitable containers as described above with reference to Fig. 1, section III. A flow line 208, preferably of the same type as that described above with reference to Fig. 1, section I, at 34 communicates with a cheese vat (not shown) for carrying out the flow of cheese granules and whey through flow line 208 and spraying 210 the suspension of cheese granules and whey onto the conveyer belt 206 thereby creating a mixture of slices of olive 204 and cheese granules for filling into suitable containers as described above with reference to Fig. 1, section III.

In Fig. 4, a further alternative way of mixing cheese granules with slices of olive before filling into suitable containers is shown. A conveyer system 220 is shown comprising a conveyer belt 226 for transportation of olives 224 onto a cylinder 234 which is rotating so as to transport the olives 224 to a second conveyer belt 232. The slices of olive 224 are dosed onto the conveyer belt 226 by means of a dosing facility 222 preferably of the same type as that described above with reference to Fig. 1, section II. The conveyer belt 226 transports the olives 224 to the cylinder 234 whereto is sprayed at 230 cheese granules and whey, the cheese granules and whey being led through and spraying out of a flow line 228. The mixture of cheese granules and olives 224 is being transferred to the conveyer belt 232 by means of the cylinder 234 and whey is being discharged by way of the cylinder 234. The mixture of cheese granules and slices of olive are then transported onto conveyer belt 232 to a slope (not shown) for carrying out the filling into suitable containers as described above under Fig. 1, section III.

In Fig. 5, a further embodiment of a section for mixing cheese granules and slices is shown. A conveyer system comprises a container 250 which is defined by a sloping side wall 256 and a sloping opposite side wall 258 and a sloping end wall 260 and an opposite sloping end wall 262. At the bottom of the container 250 four tubes 268 are connected which communicate with the bottom of the container 250. On one side of the container 250, a conveyer belt 252 for transporting slices of olive 254 to the container 250 is provided and on the opposite side a conveyer belt 264 for transporting cheese granules 266 to the container 250 is provided. The conveyer belts 252 and 264 are moving with such a speed relative to one another that a thorough mixing of the cheese granules and slices of olive is caused. The mixture of cheese granules 266 and olives 254 settles in the tubes 268 which tubes are being sealed by way of a slide gate 270. The slide gate 270 includes a propelling cylinder 272 the cylinder being operated by mechanical, pneumatical or electrical means or the like, which is connected to a gate plate 274 which gate 274 plate has holes 276 incorporated therein. By moving the gate plate 274 back and forth, the holes 276 are positioned directly under the tubes 268 so as to cause the emptying of the tubes 268 by way of gravity or positioned offset relative to the tubes 268 closing off the bottom apertures of the tubes 268. Beneath the tubes 268 and the slide gate 270 a cheese hoop 278 is positioned which is preferably of the same type as described above with reference to Fig. 1, III. The mixture of cheese granules 266 and olives 254 is released by operating the slide gate 270 and thus, a suitable dosing into containers 280 is carried out. The filling of the individual containers 280 or the cheese hoop 278 may be accomplished by simply dosing the mixture onto the top surface of the cheese hoop and thereupon forcing the mixture material into the individual containers by means of a shovel og spatular-like facility, e.g. similar to the removing facility 112 described above with reference to Fig. 1, section III. Alternatively, the slide gate 270 may be operated accurately for dosing a specific amount of mixture material into each of the four containers 280 of the cheese hoop 278 positioned below in registration with the dosing tubes 268 of the container 250. After the accurate filling of four containers of the cheese hoop 278 has taken place and the slide gate 270 has closed the bottom apertures, the cheese hoop 278 is shifted transversly relative to the conveyer belts 252 and 264 for positioning and registering a set of four containers below the tubes 268 for filling the empty containers 280 of the cheese hoop 268 positioned below the tubes 262 with the accurately dosed mixture. In the above process of accurately dosing mixture material into the individual containers 280 of the cheese hoop 278, the container 250 and also the conveyer belts 252 and 264 are stationary whereas the cheese hoop 278 is moved transversly. Alternatively, the cheese hoop 278 may of course be kept stationary whereas the container 250 and optionally also the conveyer belt 252 and 264 are moved stepwise relative to the stationary cheese hoop 278 or further alternatively, the container 250 and optionally the conveyer belts 252 and 264 as well the cheese hoop 278 may be non-stationary and consequently movable elements which are moved relative to one another for positioning the individual containers 280 of the cheese hoop 278 in registration below the tubes 268.

In Fig. 6, an alternative way of filling a mixture of cheese granules and slices of olive is shown. A container 300 constitutes a tube wherein holes 306 are provided for discharging of liquids. A hopper 302 is dosing the mixture 304 of cheese granules and whey and slices of olive into the tube container 300. As soon as the container is filled, shown at 310, a pressure generating tool or plunger 312 is pressing the mixture of cheese granules and olives in order to discharge and whey shown at 314. After a suitable storing period the compressed mixture of cheese granules and olives 320 is cut into individual shallow cylindrical cheese products 322.

In Fig. 7, a cheese product 340 according to the present invention is shown containing slices of olive. The cheese product 340 has the shape of a cylinder with pieces of olive 342 distributed therein. The cheese granules of the cheese product 340 are compressed so as to create a surface with cracks or fissures 344.

In Fig. 8, a cheese product 350 of the same type as that described above with reference to Fig. 7 is shown. The cheese product 350 contains slices of olive 354 and has cracks or fissures 356 on the surface. A section of the cheese is cut away shown at 352, thus disclosing the inner structure of the cheese. The inner structure of the cheese has slices of olive 360 distributed therein. Cracks 358 can also be seen in the inner structure of the cheese product 350.

### General procedure

Starting from milk of a specific origin or mixed milk having a 0 to 10% fat content and 2,5 to 5% protein content, the milk is optionally pasteurized following usual procedures or submitted to ultrafiltration, microfiltration and other similar procedures. Once the milk base characteristics have been determined, the milk is brought to a temperature of 29 to 33°C. The cheese-milk is introduced into suitable containers such as cheese vats and then the addition of the selected ferments is carried out. The addition operation generally takes place 0 to 30 minutes before the addition of rennet so as to give the milk a mass of very active microorganisms that can give fermentation the desired orientation at once.

Rennet of various title and characteristics and in varying doses is then added to the milk. Optionally, dye is added to the milk as well. Coagulation takes place at a temperature of about 29 to 33°C and at an average duration of about 30-90 minutes and enables a soft, crude and non-elastic curd to be achieved. At all events rennet amount and coagulation temperature and duration may vary depending on the milk characteristics and the particular features to be achieved in the finished product.

After the curd hardening step, usually 45 to 120 minutes, preferably about 90 minutes after the addition of rennet, the coagulum is cut with a wire into cheese granules, such as cubes of a specific size. Such a size may be e.g. 5 mm x 5 mm x 5 mm to 30 mm x 30 mm x 30 mm, such as 10 mm x 10 mm x 10 mm to 20 mm x 20 mm x 20 mm, e.g. 15 mm x 15 mm x 15 mm.

The coagulum stands in the containers for a further period such as 45 to 120 minutes, preferably 90 minutes, during which time stirring is carried out 1 to 5 times, preferably 1 to 3 times. During the stirring cheese granules are shaped. The stirring promotes discharge of whey from the cheese granules thereby providing the cheese granules with the specific or intentional consistency.

Hereafter the cheese granules of various sizes are fed to a conveyer belt whereto particulate edible materials are added. The edible materials are being spread over and mixed uniformly with the cheese granules. Such particulate edible materials could be of a hard or soft nature, such as fruits, e.g. grapes, raisins, berries, strawberries, citrus, apples, plumes, etc., vegetables, e.g. horseraddish, mushrooms, olives, peppers, radish, tomatoes, etc., meat, fish, e.g. salmon, ham, etc. Such edible materials are optionally cut into suitable sizes depending on the size of the cheese and the desires of the consumer. The mixture of cheese granules and particulate edible materials is then filled into suitable containers having any suitable form depending upon the desires of the consumer.

The containers are turned upside down and the cheese product are acidified in a usual manner at 20 to 25°C, preferably 24°C, for 20 to 24 hours, preferably 24 hours. Hereafter the cheese products are packaged into suitable container whereto brine having a salt content of e.g. 9 to 10% for achieving the desired salting, is optionally added. The packaged products are stored at about 2 to 6°C, preferably 5°C.

The finished product can be provided in any suitable form and size depending upon the manufacturer and the desires of the consumers.

### Example

Reference is made to the accompanying flow sheet.

Raw milk having a 3,4% fat content stored at a temperature of 4°C is cleaned and standardized so as to bring it to the desired fat and protein content. The milk is then pasteurized at about 74°C and outgassed using appropriate equipments (in order to eliminate therefrom all present odours). Afterwards the milk is cooled to about 8°C.

The pasteurized milk used for cheese-making (the cheese-milk) is heated and placed at about 31°C. The cheese-milk is introduced into cheese vats whereto is added a mesofile culture, rennet (Marzyme from Marshall products) and optionally dye.

About 90 minutes after the addition of rennet the coagulum is cut with a wire into cheese granules, more specifically cubes of about 15 mm x 15 mm x 15 mm and the coagulum stands in the cheese vat for a further 90 minutes during which time stirring is carried out 1 to 3 times. The stirring promotes discharge of whey from the cheese granules, thereby obtaining the specific or intentional consistency.

Hereafter the cheese granules are fed to a conveyer belt whereto pieces of olive are added, the olives being spread over and mixed evenly with the cheese granules. The mix of cheese granules and pieces of olive is filled into suitable containers.

The containers are turned upside down and the cheese products are acidified at 20-25°C for 20-24 hours. Hereafter the cheese products are packaged into suitable containers whereto brine or brine solution is optionally added. The packaged products are stored at about 2-6°C.

The finished product can be provided in any suitable form depending upon the desires of the consumer. For example, a typical product is a round cheese having a diameter of about 9-10 cm and a height of about 2,5-3 cm and weighs about 250 g.

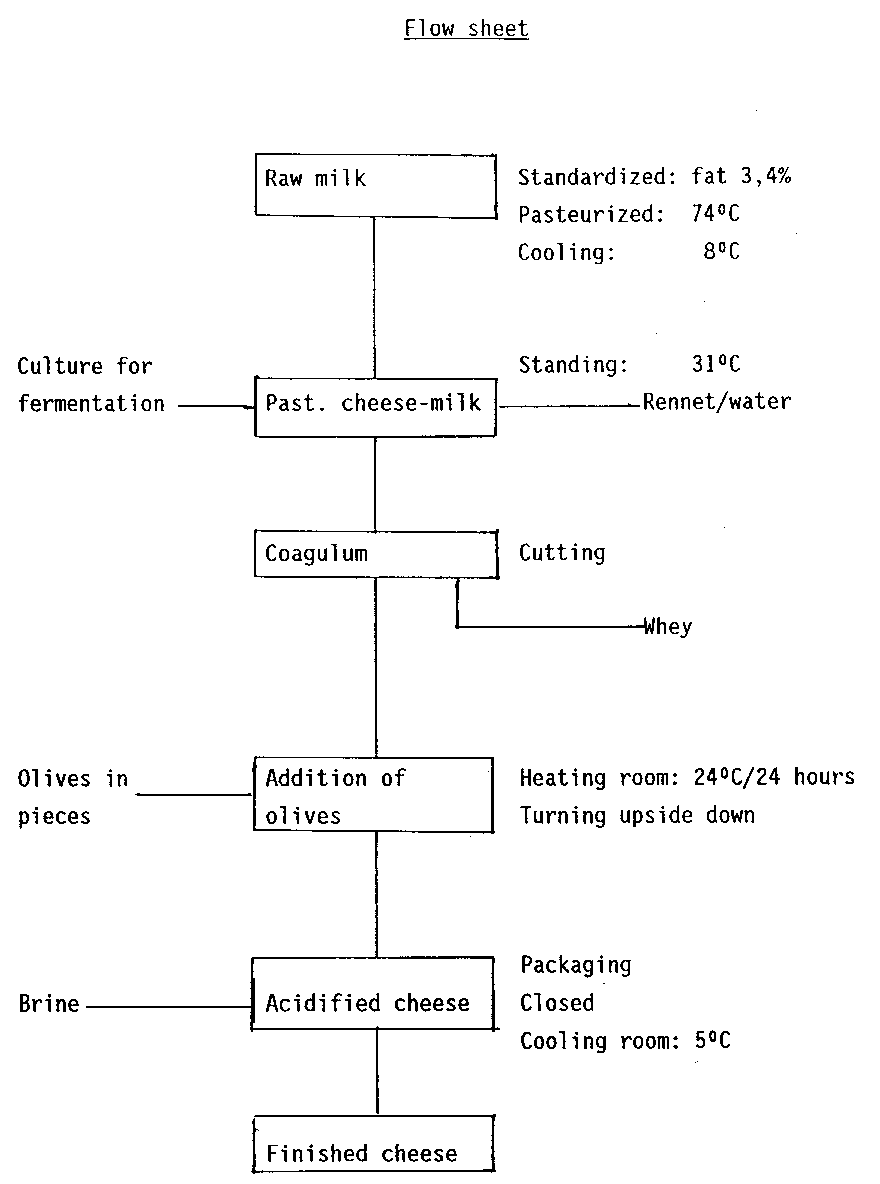

## Claims

1. A process for preparing a cheese product containing particulate edible material from milk, comprising:
a) introducing said milk into a cheese vat;
b) addition of a bacterial culture of a specific fermentation temperature range into said cheese vat containing said milk for fermentation of said milk and addition of rennet to said cheese vat, so as to cause coagulation of said milk, thereby producing a coagulum;
c) thermostatically heating or cooling said milk including said bacterial culture and said rennet to a temperature within said specific fermentation temperature range;
d) cutting said coagulum into individual cheese granules;
e) stirring and forming said cheese granules, so as to cause at least partly discharge of whey therefrom, thereby providing cheese granules of a specific consistency;
f) mixing said cheese granules with particulate edible material without influencing said consistency of said cheese granules, so as to provide an intimate mixture of cheese granules and particulate edible materiale; and
g) processing said mixture into said cheese product.

2. The process according to claim 1, step f), said mixing of said cheese granules and said edible particulate material being carried out in said cheese vat.

3. The process according to claim 2, said mixing comprising the initial step of draining a portion of said whey from said cheese vat.

4. The process according to claim 1, said processing of said mixture of said particulate material and said cheese granules comprising the initial steps of transferring said mixture to one or more cheese hoops.

5. The process according to claim 4, said mixing of said cheese granules and said edible particulate material being carried out before or while performing said step of transferring said mixture to said one or more cheese hoops.

6. The process according to claim 5, said mixing being performed by adding said particulate material to said cheese granules.

7. The process according to claim 5, said mixing being performed by adding said cheese granules to said particulate material.

8. The process according to any of claims 4-7 said transferring of said mixture being carried out by means of a transfer means, such as a conveyer means or the like.

9. The process for preparing a cheese product according to any of claims 1-8, wherein said edible particulate material is selected from nuts, grapes, raisins, berries, strawberries, citrus, apples, plums, horseraddish, mushrooms, olives, peppers, raddish, tomatoes, fish, ham and the like and slices and mixtures thereof.

10. The process for preparing a cheese product according to any of claims 1-9, wherein said particulate material is slices of olive.

11. The process for preparing a cheese product according to any of claims 1-10, wherein said particulate material has a minimum dimension in the range of about 1 mm to 50 mm, e.g. 1 mm to 40 mm, 1 mm to 30 mm, 1 mm to 20 mm, 1 mm to 10 mm, such as 1 mm to 2 mm, 2 mm to 3 mm, 3 mm to 4 mm, 4 mm to 5 mm, 5 mm to 6 mm, 6 mm to 7 mm, 7 mm to 8 mm, 8 mm to 9 mm, 9 mm to 10 mm, 10 mm to 20 mm, 20 mm to 30 mm, 30 mm to 40 mm, or 40 mm to 50 mm and/or wherein said particulate material has a volume within the range of 1 mm³ to 10 cm³, e.g. 1 mm³ to 8 cm³, 1 mm³ to 6 cm³, 1 mm³ to 4 cm³, such as 1 mm³ to 50 mm³, 50 mm³ to 200 mm³, 200 mm³ to 500 mm³, 500 mm³ to 1000 mm³, 1000 mm³ to 2 cm³, 2 cm³ to 4 cm³, 4 cm³ to 6 cm³, 6 cm³ to 8 cm³ and 8 cm³ to 10 cm³. 10 mm, 10 mm to 20 mm, 20 mm to 30 mm, 30 mm to 40 mm, or 40 mm to 50 mm.

12. The process for preparing a cheese product according to any of claims 1-10, wherein said particulate material has a weight in the range of 20 mg to 20 g, e.g. 20 mg to 2 g, 20 mg to 200 mg, 20 mg to 100 mg, such as 20 mg to 100 mg, 100 mg to 200 mg, 200 mg to 2g, or 2 g to 20 g.

13. The process according to any of claims 1-12, wherein said cheese granules produced in step d) have a size in the range of about 5 x 5 x 5 mm to about 30 x 30 x 30 mm.

14. The process according to claim 13, wherein said granules have a size of about 15 x 15 x 15 mm.

15. A cheese product wherein said cheese product is composed of an intimate mixture of cheese granules and edible particulate material.

16. A cheese product containing particulate edible material obtainable by the process of any of claims 1 to 14.

17. The cheese product according to claims 15 or 16, wherein said edible particulate material is selected from nuts, grapes, raisins, berries, strawberries, citrus, apples, plums, horseraddish, mushrooms, olives, peppers, raddish, tomatoes, fish, ham and the like and slices and mixtures thereof.

18. The cheese product according to claim 17, wherein said particulate edible material is slices of olive.

19. The cheese product according to any of claims 15-18, wherein said particulate edible material has a minimum dimension in the range of about 1 mm to 50 mm, e.g. 1 mm to 40 mm, 1 mm to 30 mm, 1 mm to 20 mm, 1 mm to 10 mm, such as 1 mm to 2 mm, 2 mm to 3 mm, 3 mm to 4 mm, 4 mm to 5 mm, 5 mm to 6 mm, 6 mm to 7 mm, 7 mm to 8 mm, 8 mm to 9 mm, 9 mm to 10 mm, 10 mm to 20 mm, 20 mm to 30 mm, 30 mm to 40 mm, or 40 mm to 50 mm and/or wherein said particulate material has a volume within the range of 1 mm³ to 10 cm³, e.g. 1 mm³ to 8 cm³, 1 mm³ to 6 cm³, 1 mm³ to 4 cm³, such as 1 mm³ to 50 mm³, 50 mm³ to 200 mm³, 200 mm³ to 500 mm³, 500 mm³ to 1000 mm³, 1000 mm³ to 2 cm³, 2 cm³ to 4 cm³, 4 cm³ to 6 cm³, 6 cm³ to 8 cm³ and 8 cm³ to 10 cm³. 10 mm, 10 mm to 20 mm, 20 mm to 30 mm, 30 mm to 40 mm, or 40 mm to 50 mm.

20. The cheese product according to any of claims 15-18, wherein said particulate edible material has a weight in the range of 20 mg to 20 g, e.g. 20 mg to 2 g, 20 mg to 200 mg, 20 mg to 100 mg, such as 20 mg to 100 mg, 100 mg to 200 mg, 200 mg to 2 g, or 2 g to 20 g.

21. The cheese product according to any of claims 15-20, which is a feta-type cheese including slices of olive.

22. A plant for preparing a cheese product containing particulate edible material from milk, comprising:
a) a cheese vat;
b) means for introducing said milk into said cheese vat;
c) means for addition of a bacterial culture of a specific fermentation temperature range into said cheese vat containing said milk for fermentation of said milk and addition of rennet to said cheese vat, so as to cause coagulation of said milk, thereby producing a coagulum;
d) means for thermostatically heating or cooling said milk including said bacterial culture and said rennet to a temperature within said specific fermentation temperature range;
e) means for cutting said coagulum into individual cheese granules;
f) means for stirring and forming said cheese granules, so as to cause at least partly discharge of whey therefrom, thereby providing cheese granules of a specific consistency;
g) means for mixing said cheese granules with particulate edible material without influencing the consistency of the cheese granules, so as to provide an intimate mixture of cheese granules and particulate edible materiale; and
h) means for processing said intimate mixture into said cheese product.

23. The plant according to claim 22, said plant being adapted to carry out the process of any of the claims 2-14 for producing said cheese product of any of the claims 15-21.
